(19) Europäisches Patentamt
European Patent Office
Office européen des brevets

(11) Publication number: 0 005 018
B1

(12) EUROPEAN PATENT SPECIFICATION

(45) Date of publication of patent specification: 09.09.81

(51) Int. Cl.³: C 01 G 23/02, C 22 B 1/08, C 22 B 34/12

(21) Application number: 79300570.3

(22) Date of filing: 06.04.79

# (54) Production of titanium chlorides.

(30) Priority: 21.04.78 GB 1581478

(43) Date of publication of application:
31.10.79 Bulletin 79/22

(45) Publication of the grant of the European patent:
09.09.81 Bulletin 81/36

(84) Designated Contracting States:
CH DE FR GB

(56) References cited:
EP - A - 0 000 498
DE - C - 334 249
GB - A - 1 431 480
US - A - 2 589 466
US - A - 3 989 510

(73) Proprietor: Laporte Industries Limited
Hanover House 14 Hanover Square
London W1R 0BE (GB)

(72) Inventor: Robinson, Michael
Pink Cottage Ulceby Road
Wooton South Humberside (GB)

(74) Representative: ffrench-Lynch, Cecil et al,
Group Patents Department Laporte Industries
Limited P O Box 8
Luton Bedfordshire LU4 8EW (GB)

EP 0 005 018 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Production of Titanium chlorides

This invention relates to the production of titanium chlorides.

There is described in US Patent No. 2 589 466 a process for the direct production of titanium tetrachloride from an iron-containing titaniferous ore by the selective chlorination of the titanium content of the ore without allowing any iron present in the ore to be chlorinated. The process involves separately pre-heating ilmenite and chlorine to a temperature between 1250° and 1450°C and maintaining them at such a temperature while bringing them together for reaction.

British Patent No. 1 431 480 makes reference to US Patent 2 589 466, reports that attempts to repeat the process of the US patent had failed and suggests that this is consistent with the findings reported in the following papers:—

Suomen Kemistilehti, 29A, pages 220—225 (1956)

Chemical Abstracts (1957) 4801(f)

Transactions of the Metallurgical Society of AIME, 218, pages 219—225 (April 1960).

British Patent No. 1 431 480 proposes an alternative process for the chlorination of the titanium constituent of a titaniferous material at a temperature of from 950°C to 1400°C in the presence of a carbonaceous material and a chlorinating agent comprising iron chloride.

Titanium trichloride may be produced from titanium tetrachloride. Titanium dichloride may also be produced from titanium tetrachloride or, alternatively, from titanium trichloride. However, it may be desired to produce titanium di- and/or trichloride directly from a titaniferous ore.

European Patent Publication No. 0000498 discloses a flow process for the production of titanium chlorides and by-product metallic iron from a titaniferous ore. Such flow process comprises the chlorination of the ore in finely divided form under substantially laminar flow conditions in a reaction zone maintained at a temperature of from 1050°C to 1950°C in the presence of a carbonaceous reductant. At very high chlorination temperatures titanium trichloride would predominate in the product and the molar ratio of chlorine to titanium need only be about 1.125:1. It is of special importance that substantially laminar flow conditions be employed and turbulence and appreciable backmixing are not consistant with such conditions.

In its broadest aspect the present invention provides a process for the production of titanium di- and/or trichloride by forming a mixture of particles of a titaniferous ore and particles of carbon, heating the particles to a temperature greater than 1500°C and contacting the heated particles with chlorine in a quantity less than required in theory for the conversion of the titanium values in the ore to titanium tetrachloride characterised in that the heating is conducted in an electrical discharge furnace or an electrical induction furnace. Preferably the mixture of particles of ore and carbon in the form of a gaseous dispersion is contacted with the chlorine.

According to a preferred aspect of the present invention the ore is an iron-containing titaniferous ore, for example ilmenite, or rutile, or a synthetic rutile and the particles are caused to react with chlorine according to one or both of the equations

$$FeO.TiO_2 + 3C + Cl_2 = 3CO + Fe + TiCl_2$$
$$FeO.TiO_2 + 3C + 1\tfrac{1}{2}Cl_2 = 3CO + Fe + TiCl_3$$

the resulting titanium lower chloride is separated and the iron content of the ore is recovered as the metal. Preferably the gaseous dispersion of particles of the ore and particles of the carbon is heated, according to this invention, to at least 1550°C. However, to avoid loss of reaction selectivity to the desired products and the production of minor quantities of iron chlorides and/or titanium tetrachloride it is particularly preferred to maintain the temperature at at least 1600°C.

The energy input required for the reaction of the ore particles with chlorine according to the invention is higher for higher reaction temperatures quite apart from the tendency to increased heat losses from the apparatus at higher temperatures. This effect becomes very marked at temperatures above 2000°C. For example, in an electrically powered reaction furnace the power input required for the reaction

$$FeO.TiO_2 + 3C + 1\tfrac{1}{2}Cl_2 = 3CO + Fe + TiCl_3$$

may increase by up to about 500 kilowatt/hours per Mg of $TiO_2$ in the ore for a reaction temperature of 2200°C in comparison with a reaction temperature of 1700°C. Preferably, therefore, the gaseous dispersion is heated according to the invention to not more than 2000°C and, particularly preferably to not more than 1900°C.

The restriction of the chlorine supply to the reaction is an important parameter in the operation of this invention. An excess of chlorine leads to the formation of iron chloride and/or titanium tetrachloride whereas a deficiency leads to the incomplete reaction of the titanium values in the ore. Under the conditions above described an excellent degree of selectivity can be obtained where from 1 to $1\frac{1}{2}$ moles of chlorine are used per mole of titanium dioxide in the ore, titanium dichloride or titanium trichloride predominating in the product depending on the actual quantity used

within the above-stated range. A certain degree of process inefficiency may be acceptable in practice and, because of this, the invention is not rigidly limited to the use of a quantity of chlorine within the above-stated range. Preferably the quantity of chlorine used is not more than 0.25 moles and particularly preferably not more than 0.1 moles outside the preferred range of 1 to 1½ moles per mole of titanium dioxide. Where a predominance of titanium dichloride is desired in the product less than 1.25 moles of chlorine, and where a predominance of titanium trichloride is desired in the product more than 1.25 moles of chlorine, are preferably used per mole of titanium dioxide.

Because of the effect of the chlorine/titanium dioxide ratio on the selectivity of the reaction it is desirable to avoid variations in the ratio in the course of the process. It is noted that the present invention would not be possible to operate in a fluidised bed, could the desired temperature be generated in such a bed, because of the inevitable excess of chlorine at its point of entry into the bed. Titaniferous ores tend to sinter in a fluidised bed at any temperature above about 1100°C.

Carbon should preferably be used in excess of the quantity required to react with the oxygen released from the titanium values and the iron values, if any, in the ore. The carbon may be in the form of coke. The particles of ore and of carbon used in the practice of this invention are preferably not more than 500 microns and 3500 microns and particularly preferably are not more than 350 microns and 3000 microns in diameter respectively.

It is an advantageous feature of the present invention that it allows the use of iron-containing titaniferous ores, such as ilmenite ore, without substantial contamination of the titanium chloride product with iron chlorides. Under the conditions utilised in the practice of this invention the iron values in the ore are not substantially chlorinated. It is a further advantageous feature of this invention that the iron values in an iron-containing titaniferous ore are reduced in the course of the process to metallic iron which, under the preferred temperature employed may be in the liquid form. The liquid iron may simply be collected in a reservoir, tapped continuously or intermittently, and cast directly into ingots if desired.

The present invention may be carried out in any of a variety of electrical discharge furnaces capable of imparting temperatures in excess of 1500°C to a particulate solid feed. Alternatively, the process may be conducted in an electrical induction furnace which has the advantage of not being subject to interference with a discharge by particles being treated, or products of that treatment, for example iron in liquid form, some of which may be electrically conductive. Suitably the process is conducted by allowing a mixture of particles of ore and carbon to fall through a reaction chamber in the presence of chlorine.

The titanium lower chloride produced according to this invention may be further chlorinated, in the gas phase and preferably without recovery from the gaseous stream remaining after the removal of the metallic iron, to produce titanium tetrachloride. Such a use of the lower chloride product of the invention is particularly advantageous since it offers a particularly efficient method of producing titanium tetrachloride from an iron-containing titaniferous ore without the formation of iron chlorides. The further chlorination of the lower chloride is exothermic and is readily accomplished merely by mixing the gaseous stream, containing the lower chlorides, with the requisite extra quantity of chlorine. The further chlorination may be conducted at any temperature at which the lower chlorides and the titanium tetrachloride are stable and is preferably conducted at a temperature below 2200°C and, particularly preferably, not above 2000°C. Preferably the further chlorination is conducted at a temperature above 1000°C. Titanium tetrachloride formed may be recovered readily from the other gases present, and from any particles of carbon and ore which may not have reacted and which may have been carried through in the stream of gases, by known recovery techniques.

Titanium trichloride produced according to this invention may, alternatively, be used in the manufacture of titanium metal by disproportionation at an elevated temperature to the metal and titanium tetrachloride, or as a catalyst in polymer production. Titanium dichloride produced according to this invention may alternatively be used as a catalyst in polymer production.

The present invention may give rise to the formation of phosgene. Normal precautions applicable to gases containing phosgene should therefore be applied.

An Example of the operation of this invention will now be described.

A coreless induction furnace Raydyne Model C95 was used. (Raydyne is a Trade Mark.).

The heating chamber was of electrically conducting graphite because the charge is initially non-conducting. This chamber was sealed at each end with a graphite screw plug and thermally insulated with ceramic wool. The chamber was 18 cms long 8 cm in external diameter and 4 cms internal diameter and arranged in a horizontal mode. There was facility to pass gas through the chamber and over the charge into a condenser for product collection. An induction coil fitted around the thermally insulated graphite chamber. Heat losses were minimised by surrounding the whole system in an asbestos box. The furnace had an output of 6 kw.

90 g of ilmenite ore (54% wt $TiO_2$ and less than 500 micron mesh particle size) and 25 g of

−5BSS mesh petroleum coke were placed in the heating chamber and power applied to the induction coil. When a temperature of 1950°C was attained on the end of the chamber as measured by an optical pyrometer the power was switched off and a iridium/40% iridium-rhodium thermocouple lead down the gas feed facility indicated a temperature of 1600°C inside the chamber. The thermocouple was then removed, the power was switched back on and chlorine gas passed over the reactants at the rage of 3 1/2 litres per minute for 5 mins. The power was switched off and the chamber purged with argon. A temperature of 1610°C was measured in the chamber at the end of the run.

Purple crystals mainly comprising $TiCl_3$ were condensed from the off gases. This lower chloride product weight 31.8 g. When the furnace was cooled there was a small unreacted residue mainly of coke and some beads of solid iron weighing 13.6 grams and which analysed about 92% wt of metallic iron.

## Claims

1. A process for the production of titanium di and/or trichloride by forming a mixture of particles of a titaniferous ore and particles of carbon, heating the particles to a temperature greater than 1500°C and contacting the heated particles with chlorine in a quantity less than required in theory for the conversion of the titanium values in the ore to titanium tetrachloride characterised in that the heating is conducted in an electrical discharge furnace or an electrical induction furnace.

2. A process as claimed in claim 1 wherein a mixture of particles of ore and carbon in the form of a gaseous dispersion is contacted with the chlorine.

3. A process as claimed in claim 1 or 2, wherein the ore is an iron-containing titaniferous ore.

4. A process as claimed in claim 2 or 3, wherein the gaseous dispersion of particles of the ore and of particles of the carbon has a temperature of from 1550°C to 2000°C.

5. A process as claimed in any preceding claim wherein the quantity of chlorine is from 0.75 moles to 1.75 moles per mole of titanium dioxide in the ore.

6. A process as claimed in any preceding claim wherein the particles of ore are not more than 500 microns in diameter and the particles of carbon are not more than 3500 microns in diameter.

7. A process as claimed in any preceding claim wherein the carbon is used in excess of the quantity required to react with the oxygen released from the ore.

8. A process as claimed in any preceding claim wherein the titaniferous ore is an iron-containing ore and the iron content thereof is recovered as the metal.

9. A process for the production of titanium tetrachloride by forming a mixture of particles of a titaniferous ore and particles of carbon, heating the particles to a temperature of greater than 1500°C and contacting the heated particles with chlorine in a quantity less than required in theory for the conversion of the titanium values in the ore to titanium tetrachloride, separating the resulting titanium di- and/or tri-chloride from any metallic iron produced and further chlorinating the titanium di- and/or tri-chloride in the gas phase to titanium tetrachloride, characterised in that the heating is conducted in an electrical discharge furnace or an electrical induction furnace.

10. A process as claimed in claim 9 conducted by contacting the titanium di- and/or tri-chloride in the gas phase with a further quantity of chlorine.

11. A process as claimed in claim 9 or 10 wherein the titanium di- and/or tri-chloride is further chlorinated at a temperature of from 1000°C to 2000°C.

## Patentansprüche

1. Verfahren zur Herstellung von Titandi- und/oder -trichlorid, bei dem man ein Gemisch aus Teilchen eines Titanerzes und Teilchen aus Kohlenstoff herstellt, die Teilchen auf eine Temperatur von oberhalb 1500°C erhitzt und die erhitzten Teilchen mit Chlor in einer Menge in Kontakt bringt, die geringer ist als die theoretisch für die Umwandlung des Titangehaltes im Erz zu Titantetrachlorid erforderlichen Menge, dadurch gekennzeichnet, daß das Erhitzen in einem elektrischen Entladungsofen oder in einem elektrischen Induktionsofen durchgeführt wird.

2. Verfahren nach Anspruch 1, bei dem ein Gemisch aus Erz- und Kohlenstoffteilchen in Form einer gasförmigen Dispersion mit Chlor in Kontakt gebracht wird.

3. Verfahren nach Anspruch 1 oder 2, bei dem das Erz ein eisenhaltiges Titanerz ist.

4. Verfahren nach Anspruch 2 oder 3, bei dem die gasförmige Dispersion der Erz- und Kohlenstoffteilchen eine Temperatur von 1550 bis 2000°C aufweist.

5. Verfahren nach einem der vorangehenden Ansprüche, bei dem die Chlormenge von 0,75 Mol bis 1,75 Mol pro Mol Titandioxid im Erz beträgt.

6. Verfahren nach einem der vorangehenden Ansprüche, bei dem die Erzteilchen einen Durchmesser von nicht mehr als 500 $\mu$ und die Kohlenstoffteilchen einen Durchmesser von nicht mehr als 3500 $\mu$ aufweisen.

7. Verfahren nach einem der vorangehenden Ansprüche, bei dem Kohlenstoff im Uberschuß zu der Menge eingesetzt wird, die für die Umsetzung mit dem aus dem Erz freigesetzten Sauerstoff erforderlich ist.

8. Verfahren nach einem der vorangehenden Ansprüche, bei dem das Titanerz ein eisenhaltiges Erz ist und der Eisengehalt als Metall wiedergewonnen wird.

9. Verfahren zur Herstellung von Titantetrachlorid durch Ausbildung eines Gemisches aus Teilchen eines Titanerzes und Kohlenstoffteilchen, Erhitzen der Teilchen auf eine Temperatur oberhalb 1500°C und in-Kontaktbringen der erhitzten Teilchen mit Chlor in einer Menge, die geringer ist, als die theoretisch für die Umwandlung der Titangehalte in dem Erz zu Titantetrachlorid erforderliche Menge, Abtrennung des erhaltenen Titandi- und/oder -trichlorids von jeglichem gebildeten metallischen Eisen und weiterem Chlorieren des Titandi- und/oder -trichlorids in der Gasphase zu Titantetrachlorid, dadurch gekennzeichnet, daß das Erhitzen in einem elektrischen Entladungsofen oder einem elektrischen Induktionsofen durchgeführt wird.

10. Verfahren nach Anspruch 9, bei dem man das Titandi- und/oder -trichlorid in der Gasphase mit einer zusätzlichen Menge Chlor in Kontakt bringt.

11. Verfahren nach Anspruch 9 oder 10, bei dem das Titandi- und/oder -trichlorid bei einer Temperatur von 1000 bis 2000°C weiter chloriert wird.

## Revendications

1. Procédé pour la production de dichlorure et/ou de trichlorure de titane par formation d'un mélange de particules de minerai titanifère et de particules de carbone, chauffage des particules à une température supérieure à 1500°C et mise en contact des particules chauffées avec le chlore en une quantité inférieure à celle requise selon la théorie pour la conversion de la teneur en titane du minerai en tétrachlorure de titane, caractérisé en ce que le chauffage est réalisé dans un four à décharge électrique ou dans un four à induction électrique.

2. Procédé selon la revendication 1 dans lequel un mélange de particules de minerai et de carbone sous forme d'une dispersion gazeuse est mis en contact avec le chlore.

3. Procédé selon la revendication 1 ou 2 dans lequel le minerai est un minerai titanifère contenant du fer.

4. Procédé selon la revendication 2 ou 3 dans lequel la dispersion gazeuse de particules de minerai et de particules de carbone présente une température de 1550°C à 2000°C.

5. Procédé selon l'une quelconque des revendications précédentes dans lequel le quantité de chlore est comprise entre 0,75 mole et 1,75 mole par mole de dioxyde de titane dans le minerai.

6. Procédé selon l'une quelconque des revendications précédentes dans lequel les particules de minerai ne présentent pas plus de 500 microns en diamètre et les particules de carbone pas plus de 3500 microns en diamètre.

7. Procédé selon l'une quelconque des revendications précédentes dans lequel le carbone est utilisé en excès par rapport à la quantité nécessaire pour réagir avec l'oxygène libéré par le minerai.

8. Procédé selon l'une quelconque des revendications précédentes dans lequel le minerai titanifère est un minerai contenant du fer et la teneur en fer de celui-ci est récupérée sous forme de métal.

9. Procédé pour la production de tétrachlorure de titane par formation d'un mélange de particules de minerai titanifère et de particules de carbone, chauffage des particules à une température supérieure à 1500°C et mise en contact des particules chauffées avec le chlore en une quantité inférieure à celle requise en théorie pour la conversion des teneurs en titane du minerai en tétrachlorure de titane, séparation du dichlorure et/ou du trichlorure de titane obtenu de tout fer métallique produit et chloration ultérieure du dichlorure et/ou trichlorure de titane dans la phase gazeuse pour produire du tétrachlorure de carbone, caractérisé en ce que le chauffage est effectué dans un four à décharge électrique ou un four à induction électrique.

10. Procédé selon la revendication 9 réalisé en contactant le dichlorure et/ou le trichlorure de titane dans la phase gazeuse avec une quantité complémentaire de chlore.

11. Procédé selon la revendication 9 ou 10 dans lequel le dichlorure et/ou le trichlorure de titane subit une chloration ultérieure à une température de 1000 à 2000°C.